# FASCICULE DE BREVET EUROPEEN

(11) **EP 3 903 476 B1**
(45) Date de publication et mention de la délivrance du brevet: **30.11.2022**
(21) Numéro de dépôt: 19842597.7
(22) Date de dépôt: 09.12.2019
(51) Int. Cl.: H04M 3/533, H04M 7/12, G06F 3/16, H04M 7/00, H04L 65/1104

(54) **PROCÉDÉ DE TRAITEMENT DE MESSAGES VOCAUX, PROCÉDÉ DE DÉSACTIVATION D'UN CODAGE DTMF ET PROCÉDÉ DE TRAITEMENT D'UNE DEMANDE DE DÉSACTIVATION D'UN CODAGE DTMF**
VERFAHREN ZUR VERARBEITUNG VON SPRACHNACHRICHTEN, VERFAHREN ZUR DEAKTIVIERUNG DER DTMF-CODIERUNG UND VERFAHREN ZUR VERARBEITUNG EINER ANFRAGE ZUR DEAKTIVIERUNG DER DTMF-CODIERUNG
METHOD FOR PROCESSING VOICE MESSAGES, METHOD FOR DEACTIVATING DTMF CODING AND METHOD FOR PROCESSING A REQUEST TO DEACTIVATE DTMF CODING

(30) Priorité: 28.12.2018 FR 1874344
(43) Date de publication de la demande: 03.11.2021
(73) Titulaire: Orange, 92130 Issy-les-Moulineaux (FR)
(72) Inventeur: BOUVET, Bertrand, 92326 CHÂTILLON CEDEX (FR)
(74) Mandataire: Cabinet Beau de Loménie
(86) Numéro de dépôt international: PCT/FR2019/052964
(87) Numéro de publication internationale: WO 2020/136315

(56) Documents cités:
- WO-A1-2017/197650
- US-A1- 2016 088 142

## Description

### Technique antérieure

L'invention se rapporte au domaine général des télécommunications. Elle concerne plus particulièrement le domaine des télécommunications en utilisant le codage DTMF (pour « Dual Tone Multi Frequency » en anglais) utilisé pour des communications entre des terminaux et des serveurs vocaux interactifs.

Les codes DTMF sont généralement émis par un terminal à destination d'un serveur vocal interactif, au cours d'une communication entre le terminal et le serveur, afin de permettre à un utilisateur du terminal de sélectionner des choix proposés par le serveur et de naviguer dans une arborescence offerte par le serveur. Cependant, le serveur peut aussi émettre des codes DTMF.

Le codage DTMF est historiquement utilisé pour des communications de téléphonie fixe dans les réseaux RTC (Réseau Téléphonique Commuté). Ce codage constitue un mode de signalisation d'événements (les sélections effectuées par l'utilisateur par exemple). Dans l'état de la technique, le codage DTMF est actif par défaut, quelle que soit la technologie téléphonique utilisée pour la communication entre le terminal et le serveur vocal.

Pour les réseaux RTC, les codes DTMF sont transportés au cours d'un appel téléphonique entre le terminal et le serveur vocal avec les données vocales, c'est-à-dire dans le signal audio en utilisant des fréquences spécifiques aux codes DTMF, pendant un temps d'appui de l'utilisateur du terminal sur un bouton permettant de générer un code DTMF, par exemple.

Pour les réseaux mobiles commutés en circuit, de 2ème et 3ème génération (2G, 3G), les codes DTMF sont émis en dehors de la bande de communication, dans un message de signalisation. Les codes DTMF sont transportés depuis le terminal mobile jusqu'à un commutateur mobile MSC (pour « Mobile Switch Center » en anglais) qui insère ces codes DTMF avec les données vocales, dans le flux audio et commute l'appel téléphonique vers le serveur vocal. Cependant, les codes DTMF émis par le serveur sont reçus par le terminal avec les données vocales.

Pour les réseaux supportant la voix sur IP, VoIP (pour « Voice over IP »), les codes DTMF sont transportés en mode IETF RFC4733 tant que possible, sinon avec les données vocales.

Dans tous les cas, le codage DTMF est par défaut actif dans le terminal, le serveur vocal et tous les dispositifs intermédiaires du réseau, tels que les commutateurs, les routeurs, les équipements média d'interconnexion de réseau, connus en anglais par « Media Gateway », les équipements de type I-SBC (pour « Interconnect-Session Border Controler » en anglais), et les équipements de type NBI (pour « Network Border Infrastructure » en anglais), placés en coupure de flux entre le terminal et le serveur.

Comme le codage DTMF est actif par défaut, le terminal, le serveur et les dispositifs intermédiaires se mettent toujours en écoute des flux échangés pour pouvoir détecter des codes DTMF s'ils en existent. Par conséquent, lorsqu'une communication se déroule sans échange de codes DTMF, des ressources DSP (pour « Digital Signal Processing » en anglais) de traitement de signaux sont gaspillées.

Un autre problème se présente lorsque le terminal ne dispose pas d'un clavier permettant de générer des codes DTMF. Dans ce cas, le terminal doit utiliser un autre moyen pour pouvoir communiquer avec le serveur vocal qui déploie le codage DTMF. A titre d'exemple, le terminal peut utiliser une technique de reconnaissance vocale qui permet de générer des codes DTMF à partir de messages vocaux, couplée à une technique de synthèse des codes DTMF.

Cette solution demande beaucoup de ressources de traitement DSP et de mémoire.

En plus, elle rallonge le temps de réactivité pour émettre effectivement le code DTMF vers le serveur vocal. L'expérience de l'utilisateur se dégrade si le serveur est configuré pour mettre fin à la communication au bout d'une durée déterminée et en absence de réception d'un code DTMF, ou si le serveur est configuré pour rediffuser des annonces vocales en attente de la réception d'un code DTMF.

Lorsque le terminal ne dispose pas de moyens locaux pour la reconnaissance vocale (et / ou pour la synthèse de codes DTMF), il peut solliciter un dispositif spécifique qui dispose de ces moyens. Le terminal envoie des messages vocaux de l'utilisateur au dispositif, et reçoit en retour les codes DTMF à envoyer au serveur vocal.

Cette solution présente en outre un inconvénient d'augmentation de la charge réseau pour les communications entre le terminal et le dispositif sollicité pour la reconnaissance vocale.

En particulier, lorsque le terminal peut interpréter des commandes vocales après détection d'un message vocal déterminé, dit de réveil, l'expérience de l'utilisateur est dégradée, car l'utilisateur doit annoncer le message de réveil, puis un message vocal représentatif du code DTMF que l'utilisateur souhaite envoyer au serveur vocal.

Un tel terminal peut être un assistant vocal conforme à la norme DECT et utilisant un service téléphonique VoIP (pour « Voice over Internet Protocol » en anglais) par l'intermédiaire d'un équipement de terminaison de réseau, comme l'assistant Djingo d'Orange et Deutsche Telekom (marques déposées), ou certains assistants vocaux conçus pour des personnes âgées, des enfants ou des personnes malvoyantes. En effet, l'utilisateur doit annoncer le message vocal de réveil pour que le terminal interprète le prochain message vocal qu'il détecte en tant que commande. A titre d'exemple, le message de réveil d'un assistant vocal de Google (marque déposée) est « Ok Google ! » ou « Bonjour Google ! », le message de réveil d'un assistant Djingo est « Ok Djingo ! ». Ensuite, l'utilisateur doit annoncer vocalement ce qu'il souhaite envoyer au serveur vocal qui ne peut interpréter que des codes DTMF, par exemple en disant « sélectionner option 1 », le terminal doit convertir cette commande vocale en un code DTMF si ce terminal dispose localement d'un moyen de reconnaissance vocale et de synthèse de codes DTMF, sinon le terminal doit envoyer la commande vocale à un dispositif spécifique qui lui retourne le code DTMF.

En plus des inconvénients déjà cités, l'utilisateur doit connaître la commande vocale qu'il doit annoncer pour qu'elle soit correctement interprétée, par exemple « option 1 » ou « 1 » ou « sélection 1 » ou « DTMF 1 ».

Aussi, la prononciation du message de réveil pendant la communication entre le terminal et le serveur vocal peut révéler des informations du domaine privé à ce serveur. Par exemple, le message de réveil « OK Djingo » révèle que le terminal est un assistant vocal de type Djingo et que l'utilisateur est un client de l'opérateur Orange.

De plus, les messages vocaux destinés à l'assistant vocal sont reçus par le serveur car la communication est établie. Par conséquent, lorsque le serveur vocal dispose lui aussi d'un module de reconnaissance vocale, les messages vocaux adressés à l'assistant vocal peuvent déclencher des interactions de services non prévues au niveau du serveur, par exemple le serveur peut générer un message « Veuillez répéter je n'ai pas compris la commande ».

Il existe donc un besoin en une solution permettant à un terminal de communiquer avec un serveur vocal, et qui ne présente pas ces inconvénients. Enfin, le document WO2017197650, décrivant un procédé et un dispositif pour une interaction dans un appel, est connu.

### Exposé de l'invention

L'invention vise un procédé de traitement de messages vocaux par un terminal, le procédé comprenant des étapes de:
-- envoi à un serveur vocal d'une requête devant être interprétée par le serveur pour désactiver un codage DTMF sur un canal de communication entre le serveur et le terminal ;
-- réception en provenance du serveur d'une donnée de configuration du terminal;
-- interprétation de la donnée de configuration et application au terminal d'un mode de configuration obtenu à partir de cette interprétation ; et
-- traitement des messages vocaux par le terminal selon le mode de configuration.

Corrélativement, l'invention vise un système communiquant comportant un terminal, le système communiquant comprenant :
-- un module de communication configuré pour envoyer à un serveur vocal une requête devant être interprétée par le serveur pour désactiver un codage DTMF sur un canal de communication entre le serveur et le terminal, et pour recevoir du serveur une donnée de configuration du terminal ; et
-- un module de paramétrage configuré pour interpréter la donnée de configuration et pour appliquer au terminal un mode de configuration obtenu à partir de ladite interprétation, le terminal devant traiter des messages vocaux selon le mode de configuration.

Les caractéristiques et avantages du procédé de traitement de messages vocaux selon l'invention présentés ci-après s'appliquent de la même façon au système communiquant selon l'invention et vice versa.

L'invention permet d'adapter les communications avec les serveurs vocaux aux terminaux de nouvelles technologies, ne disposant pas forcément d'un clavier pour pouvoir générer des codes DTMF.

L'invention permet à un terminal ne pouvant pas ou ne souhaitant pas utiliser le codage DTMF, de tenter de faire désactiver le codage DTMF par le serveur et d'établir une solution alternative au codage DTMF.

Dans un mode de réalisation, la donnée de configuration comporte un acquittement positif de la requête pour la désactivation du codage DTMF.

Ce mode permet au terminal de communiquer avec le serveur selon une méthode alternative au codage DTMF, cette méthode alternative pouvant être spécifiée par la donnée de configuration.

Par exemple, la méthode alternative peut être une méthode de reconnaissance vocale au niveau du serveur. Le terminal applique donc un mode de configuration pour éviter la génération de codes DTMF et simplement transmettre les messages vocaux qu'il détecte au serveur. La donnée de configuration peut comporter aussi une commande au terminal pour qu'il traite les messages vocaux avant de les transmettre au serveur, sans générer des codes DTMF, par exemple une compression ou une application d'un filtre aux messages vocaux.

Ce mode permet également aux dispositifs intermédiaires placés en coupure de flux entre le terminal et le serveur de savoir que le codage DTMF est désactivé sur le canal de communication entre le terminal et le serveur, et donc ne plus surveiller ce canal afin de détecter des codes DTMF. L'invention permet donc de réduire le besoin en mémoire et en ressources DSP au niveau des dispositifs intermédiaires concernés par le canal de communication entre le terminal et le serveur.

Lorsque le terminal est un assistant vocal, ce mode permet une réactivité accélérée au niveau des messages émis par le terminal, celui-ci n'ayant pas besoin d'interpréter des commandes vocales ni de générer, ou solliciter un dispositif pour générer des codes DTMF.

Dans un mode de réalisation, la donnée de configuration comporte une commande pour que le terminal interprète pendant une durée déterminée les messages vocaux en tant que commandes vocales.

Ce mode permet à un terminal de type assistant vocal de se dispenser d'une détection d'un message de réveil. La qualité d'expérience de l'utilisateur sera alors améliorée : l'utilisateur n'ayant plus besoin d'annoncer le message de réveil. En plus les données personnelles de l'utilisateur sont mieux protégées : le serveur n'entend pas le message de réveil et ne peut pas donc déduire que le terminal est un assistant vocal.

Dans un mode de réalisation, la requête, envoyée au serveur vocal, est comprise dans un champ d'un message de signalisation. Ce mode permet d'envoyer cette requête indépendamment des données vocales et de façon transparente vis-à-vis de l'utilisateur du terminal.

Dans un mode de réalisation, le message de signalisation est :
- un message de type SIP INVITE, SIP REINVITE, SIP UPDATE, SIP 200 OK, ou SIP 1XX;
- une offre ou une réponse conforme au protocole SDP (pour « Session Description Protocol » en anglais) ;
   -- un entête SIP Supported ou SIP Required ;
   -- un nouveau entête SIP dédié pour transmettre ladite requête;
   -- un message conforme au protocole ISUP/BICC de type IAM, ACM, ANM, PRG, ou CON; ou
   -- une requête HTTP de demande d'établissement d'une session WebRTC.

Conformément à l'état de la technique, les messages de type SIP INVITE, SIP REINVITE et SIP UPDATE sont utilisés pour une signalisation d'une communication sortante, les messages de type SIP 200 OK sont utilisés pour une signalisation d'une communication entrante, les messages de type SIP 1XX sont utilisés pour une signalisation sans prise de ligne de l'appelé, en mode dit « Early Media » en anglais, tel qu'un message de type SIP 180 Ringing ou SIP 183 In Progress. Les messages de type SIP 1XX peuvent encapsuler une offre ou une réponse conforme au protocole SDP et adaptée pour transmettre la dite requête.

Plusieurs types de messages de signalisation sont envisageables. Des messages connus de l'art antérieur peuvent être exploités pour transmettre la requête.

En particulier, ces messages de signalisation peuvent être utilisés indépendamment de l'invention. Il n'y a donc pas d'envoi de messages additionnels spécifiques pour l'invention.

Dans un autre mode de réalisation, la requête est comprise dans une séquence en DTMF.

Ce mode est utile lorsque le système communiquant, conforme à l'invention, ne sait pas si le serveur dispose d'un moyen de communication alternatif au codage DTMF. Dans ce cas, le système de communication envoie la requête en tant que code DTMF car le codage DTMF est supposé être activé par défaut au niveau du serveur.

Dans un autre mode de réalisation, la requête est comprise dans un message vocal pouvant être interprété par ledit serveur.

Ce mode permet à l'utilisateur du terminal d'annoncer vocalement qu'il ne peut pas ou ne souhaite pas utiliser le codage DTMF. Alternativement, le message vocal comportant la requête peut être généré automatiquement par le système communiquant conforme à l'invention. Ce mode nécessite que le serveur dispose d'un moyen pour interpréter le message vocal, par exemple un moyen de reconnaissance vocale.

Dans un mode de réalisation, l'envoi de la requête n'est effectué que si on détermine que le terminal ne dispose pas d'un clavier permettant de générer des codes DTMF.

Ce mode est particulièrement intéressant lorsque le système communiquant conforme à l'invention, mettant en œuvre le procédé de l'invention, comporte plusieurs terminaux. Le système communiquant peut demander la désactivation du codage DTMF uniquement pour les terminaux ne disposant pas d'un clavier pour générer des codes en DTMF, les autres terminaux ayant des claviers et peuvent communiquer avec le serveur vocal en utilisant le codage DTMF.

Dans un mode de réalisation, le système communiquant comporte une base conforme à la norme DECT et l'étape de détermination que le terminal ne dispose pas d'un clavier peut être mise en œuvre par la base.

En particulier, la base DECT peut être intégrée dans un équipement de terminaison de réseau, un tel équipement connu en France sous le nom de « box » tel qu'un équipement LiveBox (produit commercialisé d'Orange, marque déposée). Autrement, la base n'est pas intégrée à l'équipement de terminaison de réseau mais elle est connectée à un port numérique ou analogique de cet équipement.

Dans un mode de réalisation, la détermination que le terminal ne dispose pas d'un clavier est obtenue à partir d'un message reçu du terminal. Ce message pouvant être un message de type ACCESS-RIGTHS-REQUEST d'appairage du terminal avec la base, ou un message émis après l'appairage, tel qu'un message de type CC-FACILTY, MM-IWU ou CC-INFO.

Des messages connus de l'art antérieur peuvent alors être utilisés pour transmettre une information indiquant que le terminal ne dispose pas de clavier permettant de générer des codes DTMF. En particulier, ces messages peuvent être envoyés indépendamment de l'invention, il n'y a donc pas d'envoi de messages en plus spécifiques pour l'invention.

Dans un mode de réalisation où la base est comprise dans un équipement de terminaison de réseau, la détermination que le terminal ne dispose pas de clavier permettant de générer des codes DTMF est obtenue par lecture d'une donnée de configuration de cet équipement.

En configurant l'équipement de terminaison de réseau, l'utilisateur peut configurer aussi la base et préciser les terminaux qui ne disposent pas de clavier.

L'invention vise également un procédé de désactivation d'un codage DTMF sur un canal de communication entre un serveur vocal et un terminal, le procédé étant mis en œuvre par le serveur et comprenant des étapes de:
- réception d'une requête devant être interprétée par le serveur pour désactiver le codage DTMF sur le canal ;
- activation pour le canal d'une solution alternative pour communiquer avec le terminal, à la place du codage DTMF ; et
- envoi au terminal d'une donnée de configuration comportant un acquittement positif de la requête.

Corrélativement, l'invention vise un premier serveur vocal connecté à un terminal via un canal de communication et pouvant communiquer avec ledit terminal par un codage DTMF, ce premier serveur comprenant :
- un module de communication configuré pour recevoir une requête devant être interprétée par ledit serveur pour désactiver le codage DTMF sur le canal ; et
- un module de paramétrage configuré pour activer pour le canal une solution alternative pour communiquer avec le terminal, à la place du codage DTMF,
le module de communication étant configuré pour envoyer au terminal une donnée de configuration comportant un acquittement positif de la requête.

Les caractéristiques et avantages du procédé de traitement de messages vocaux par un terminal selon l'invention s'appliquent de la même façon au procédé de désactivation d'un codage DTMF selon l'invention et vice versa.

Les caractéristiques et avantages du procédé de désactivation d'un codage DTMF selon l'invention présentés ci-après s'appliquent de la même façon au premier serveur selon l'invention et vice versa.

Comme expliqué précédemment, l'invention permet à un terminal ne souhaitant pas ou ne pouvant pas communiquer avec le serveur en utilisant le codage DTMF (notamment car il ne dispose pas d'un clavier), d'utiliser la solution alternative proposée par le serveur. La désactivation du codage DTMF sur le canal permet de réduire le temps de transit et le besoin en ressources DSP, car les dispositifs intermédiaires concernés par le canal n'auront plus besoin d'être en mode de détection de codes DTMF.

Dans un mode de réalisation, la solution alternative comporte une technique de reconnaissance vocale en réception et une technique de synthèse vocale en émission.

L'invention vise également un procédé de traitement d'une demande de désactivation d'un codage DTMF sur un canal de communication entre un serveur vocal et un terminal, ce procédé étant mis en œuvre par le serveur et comprenant des étapes de:
- réception d'une requête devant être interprétée par le serveur pour désactiver le codage DTMF sur le canal ;
- maintien du codage DTMF ;
- envoi au terminal d'un acquittement négatif de la requête et / ou d'une donnée de configuration comportant une commande pour que le terminal interprète pendant une durée déterminée des messages vocaux détectés par ledit terminal en tant que commandes vocales.

Corrélativement, l'invention vise un deuxième serveur vocal connecté à un terminal via un canal de communication et pouvant communiquer avec le terminal par un codage DTMF, ce deuxième serveur comprenant :
- un module de communication configuré pour recevoir une requête devant être interprétée par ce serveur pour désactiver le codage DTMF sur le canal ; et
- un module de paramétrage configuré pour maintenir le codage DTMF ;
le module de communication étant configuré pour envoyer au terminal un acquittement négatif de ladite requête et / ou une donnée de configuration comportant une commande pour que le terminal interprète pendant une durée déterminée des messages vocaux détectés par le terminal en tant que commandes vocales.

L'acquittement négatif est traité par le terminal comme une donnée de configuration. Dans la suite de la description, on utilisera de façon équivalente les expressions « acquittement négatif » et « donnée de configuration comportant un acquittement négatif ».

Les caractéristiques et avantages du procédé de traitement de messages vocaux par un terminal selon l'invention s'appliquent de la même façon au procédé de traitement d'une demande de désactivation d'un codage DTMF selon l'invention et vice versa.

Les caractéristiques et avantages du procédé de traitement d'une demande de désactivation d'un codage DTMF selon l'invention présentés ci-après s'appliquent de la même façon au deuxième serveur selon l'invention et vice versa.

Le deuxième serveur peut ne pas disposer d'une solution alternative au codage DTMF. Lorsque le terminal est un assistant vocal, la donnée de configuration permet à l'utilisateur du terminal de se dispenser d'annoncer le message de réveil, et donc d'améliorer la qualité de son expérience.

Dans un mode de réalisation, l'envoi de la donnée de configuration comportant la commande pour que le terminal interprète les messages vocaux en tant que commandes et optionnel, et le fait pour le terminal de recevoir l'acquittement négatif suffit pour que ce terminal interprète les messages vocaux détectés pendant une durée déterminée en tant que commandes.

L'invention vise également un premier système de communication comportant un système communicant conforme à l'invention et un premier serveur conforme à l'invention.

L'invention vise également un deuxième système de communication comportant un système communicant conforme à l'invention et un deuxième serveur conforme à l'invention.

L'invention vise également un premier programme d'ordinateur sur un support d'enregistrement, ce programme étant susceptible d'être mis en œuvre dans un ordinateur ou un dispositif d'un système communiquant conforme à l'invention, tel que le terminal ou une base DECT ou un équipement de terminaison de réseau. Ce programme comporte des instructions adaptées à la mise en œuvre d'un procédé de traitement de messages vocaux par un terminal conforme à l'invention, tel que décrit ci-dessus.

L'invention vise également un deuxième programme d'ordinateur sur un support d'enregistrement, ce programme étant susceptible d'être mis en œuvre dans un ordinateur ou un premier serveur conforme à l'invention. Ce programme comporte des instructions adaptées à la mise en œuvre d'un procédé de désactivation d'un codage DTMF conforme à l'invention, tel que décrit ci-dessus.

L'invention vise également un troisième programme d'ordinateur sur un support d'enregistrement, ce programme étant susceptible d'être mis en œuvre dans un ordinateur ou un deuxième serveur conforme à l'invention. Ce programme comporte des instructions adaptées à la mise en œuvre d'un procédé de traitement d'une demande de désactivation d'un codage DTMF conforme à l'invention, tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier, du deuxième ou du troisième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 illustre une architecture d'un réseau comportant un système communiquant et un serveur vocal conformes à un mode de réalisation de l'invention ;
[Fig. 2] la figure 2 illustre une architecture d'un réseau comportant un système communiquant et un serveur vocal conformes à un autre mode de réalisation de l'invention ;
[Fig. 3] la figure 3 est un organigramme représentant des étapes d'un procédé de traitement de messages vocaux, et des étapes d'un procédé de désactivation d'un codage DTMF selon un mode de réalisation, les procédés étant conformes à l'invention;
[Fig. 4] la figure 4 est un organigramme représentant des étapes d'un procédé de traitement de messages vocaux, et des étapes d'un procédé de traitement d'une demande de désactivation d'un codage DTMF selon un mode de réalisation, les procédés étant conformes à l'invention;
[Fig. 5] la figure 5 est un organigramme représentant une étape de détermination qu'un terminal ne dispose pas de clavier, selon un premier mode de réalisation ;
[Fig. 6] la figure 6 est un organigramme représentant une étape de détermination qu'un terminal ne dispose pas de clavier, selon un deuxième mode de réalisation ;
[Fig. 7] la figure 7 est un organigramme représentant une étape de détermination qu'un terminal ne dispose pas de clavier, selon un troisième mode de réalisation ;
[Fig. 8] la figure 8 présente des architectures fonctionnelles d'un système de communication comportant un système communiquant et un premier serveur conformes à l'invention, selon un mode de réalisation de l'invention;
[Fig. 9] la figure 9 présente des architectures fonctionnelles d'un système de communication comportant un système communiquant et un deuxième serveur conformes à l'invention, selon un autre mode de réalisation de l'invention; et
[Fig. 10] la figure 10 présente des architectures matérielles d'un système communiquant, d'un premier et d'un deuxième serveur vocal selon un mode de réalisation de l'invention.

### Description des modes de réalisation

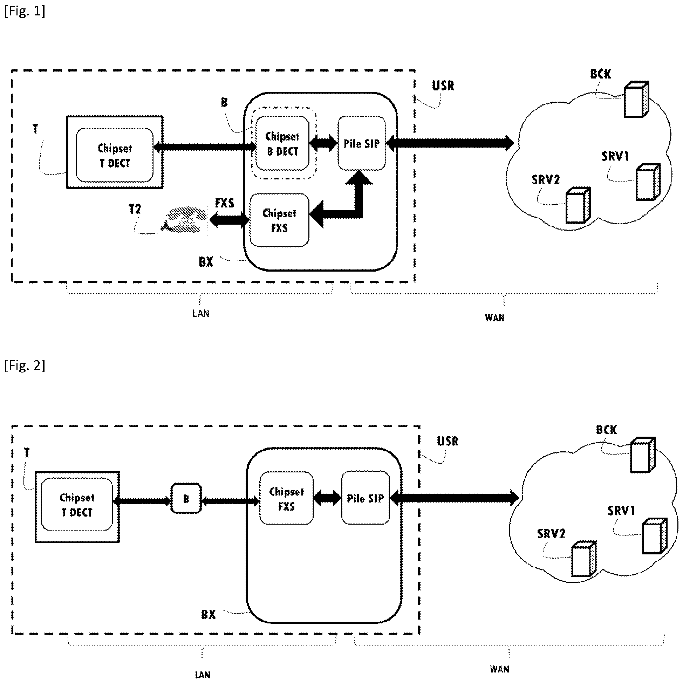

La **figure 1** illustre une architecture d'un réseau comportant un système communiquant USR, un premier serveur vocal SRV1 et un deuxième serveur vocal SRV2, le système USR et les serveurs SRV1 et SRV2 étant tous conformes à un mode de réalisation de l'invention.

Le système USR comporte un terminal T et une base B conformes à la norme DECT. La base B est intégrée dans un équipement de terminaison de réseau BX. Cet équipement BX permet de connecter le système USR à un réseau cœur WAN.

Dans ce mode de réalisation, le terminal T est un assistant vocal, ne disposant pas d'un clavier permettant de générer des codes DTMF. Ce terminal T peut interpréter des messages vocaux en tant que commandes vocales, sur détection d'un message de réveil MCmd, par exemple « ok Djingo ! ». Le terminal T ne dispose pas de moyens de reconnaissance vocale. Pour interpréter les commandes vocales, ce terminal T communique avec un dispositif BCK dédié pour mettre en œuvre une méthode de reconnaissance vocale pour des assistants vocaux, comme le terminal T. Le terminal T envoie les commandes vocales qu'il détecte à ce dispositif BCK et reçoit en retour des commandes d'envoi de codes DTMF correspondants à ces commandes.

Dans ce mode, le serveur SRV1 comporte un codeur-décodeur DTMF, et des moyens pour appliquer une solution alternative au codage DTMF, telle qu'une méthode de reconnaissance vocale en réception, et une méthode de synthèse vocale en émission.

Dans le mode décrit ici, le serveur SRV2 ne dispose pas de moyens pour appliquer une solution alternative au codage DTMF.

Le terminal T et la base B disposent chacun d'un circuit intégré (chipset) pour communiquer selon la norme DECT via un canal conforme à cette norme DECT.

L'équipement BX comporte une pile protocole SIP pour communiquer avec des dispositifs ou des serveurs du réseau cœur WAN. L'équipement BX peut comporter en outre un circuit intégré et un port analogique de type FXS pour connecter un terminal analogique T2.

La **figure 2** illustre une architecture d'un réseau comportant un système communiquant USR, un premier serveur vocal SRV1 et un deuxième serveur vocal SRV2, le système USR et les serveurs SRV1 et SRV2 étant tous conformes à un mode de réalisation de l'invention. Ce mode de réalisation diffère du mode de la figure 1 en ce que la base B n'est pas intégrée dans l'équipement de terminaison de réseau BX, mais connectée à un port de type FXS de l'équipement BX.

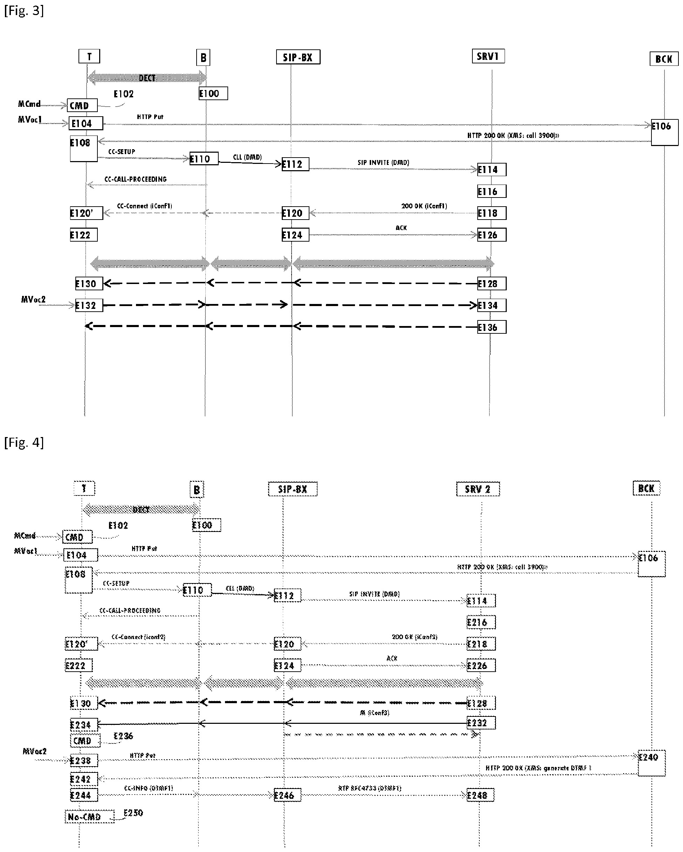

La **figure 3** est un organigramme représentant des étapes d'un procédé de traitement de messages vocaux par un terminal, conforme à l'invention, mis en œuvre par le système communiquant USR, conforme à l'invention, en référence aux étapes E100, E110, E112, E120, E120', E122 et E132 décrites ci-après. L'organigramme de la figure 3 représente également des étapes d'un procédé de désactivation d'un codage DTMF, conforme à l'invention, mis en œuvre par le serveur SRV1, conforme à l'invention, en référence aux étapes E114, E116, E118 et E134 décrites ci-après.

Selon le mode décrit ici, les procédés de l'invention peuvent être mises en œuvre dans un réseau dont l'architecture est illustrée par la figure 1 ou par la figure 2.

Nous supposons ici que le terminal T est déjà appairé avec la base B.

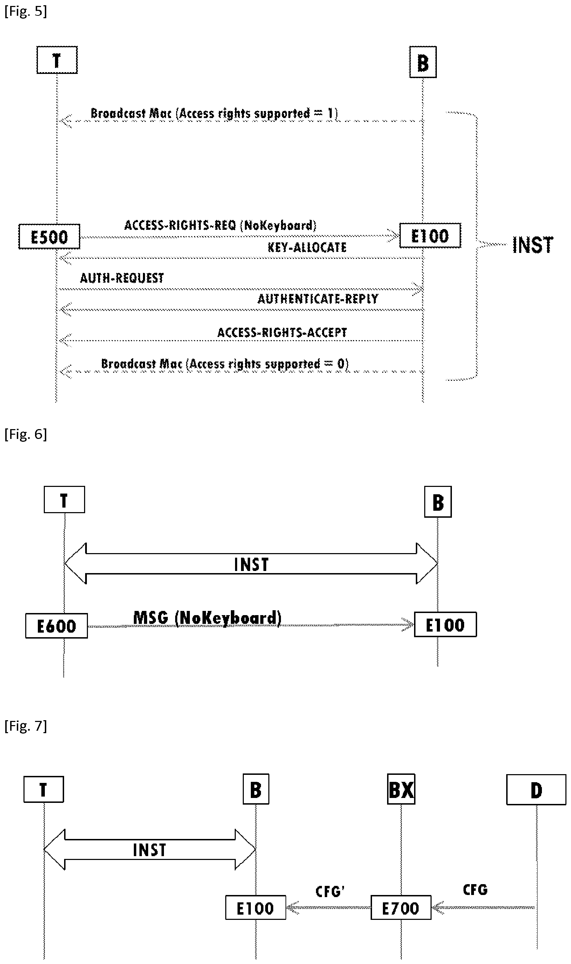

Au cours d'une étape E100, la base B détermine que le terminal T ne dispose pas de clavier permettant de générer des codes DTMF. Cette étape E100 sera décrite en détails ultérieurement en référence aux figures 5 à 7.

Au cours d'une étape E102, le terminal T détecte le message de réveil MCmd, il se configure alors pour interpréter le prochain message vocal détecté en tant que commande vocale.

Au cours d'une étape E104, le terminal reçoit un message vocal MVoc1 et le considère en tant que commande vocale. Le terminal T sollicite le dispositif BCK pour lui demander d'interpréter la commande vocale. Au cours de l'étape E104, le terminal T envoie le message vocal MVoc1 au dispositif BCK, dans un message de type « HTTP Put » par exemple.

Ce dispositif BCK reçoit au cours d'une étape E106 le message vocal, interprète que ce message comporte une commande pour émettre un appel vers le serveur SRV1, et renvoie en retour, au terminal T, une commande pour appeler le serveur SRV1. Cette commande est envoyée dans un message de type « HTTP 200 Ok » par exemple, avec un paramètre de type « XMS : call ».

Au cours d'une étape E108, le terminal reçoit cette commande et déclenche une communication sortante vers le serveur SRV1.

Conformément à l'état de la technique, le terminal envoie un message de type « CC-Setup » à la base B pour émettre la communication sortante. La base B acquitte ce message par un message de type « CC-Call-Processing ».

Au cours d'une étape E110, la base B envoie à la couche protocolaire SIP de l'équipement BX, un message de type CLL, après avoir inséré une requête DMD devant être interprétée par le serveur SRV1 pour désactiver un codage DTMF sur le canal de communication entre le serveur SRV1 et le terminal T. Dans cet exemple, la requête DMD comporte une information indiquant que le terminal T ne dispose pas de clavier.

Au cours d'une étape E112, la couche protocolaire SIP de l'équipement BX émet un message de signalisation, de type « SIP INVITE », comportant la requête DMD, vers le serveur SRV1.

Au cours d'une étape E114, le serveur SRV1 reçoit ce message de signalisation, extrait la requête DMD.

Au cours d'une étape E116, le serveur SRV1 active la solution de reconnaissance vocale pour le terminal T, à la place du codage DTMF.

Au cours d'une étape E118, le serveur SRV1 envoie un message de signalisation de type « SIP 200 OK» comportant une donnée de configuration i-Conf1 dans ce message. Ce message de signalisation permet d'informer le terminal T que le serveur SRV1 accepte de recevoir la communication émise par le terminal T, mais aussi, grâce à la donnée i-Conf1, d'acquitter positivement la demande de désactivation du codage DTMF sur le canal connectant le serveur SRV1 au terminal T.

La couche protocolaire SIP de l'équipement BX reçoit ce message de signalisation au cours d'une étape E120 et le transmet à la base B, qui à son tour, envoie au terminal T un message de type CC-Connect, après avoir inséré la donnée de configuration i-Conf1 dans ce message.

Le terminal T reçoit la donnée de configuration i-Conf1, au cours d'une étape E120', interprète au cours d'une étape E122 la donnée de configuration i-Conf1 en tant qu'une commande pour désactiver le codage DTMF, et applique au cours de l'étape E122 un mode de configuration dans lequel il désactive le codage DTMF.

En parallèle, suite à la réception du message de type SIP 200 OK, l'équipement BX envoie au cours d'une étape E124 un acquittement au serveur SRV1. A la réception E126 de cet acquittement, le serveur SRV1 désactive le codage DTMF pour le terminal T.

A la fin des étapes E122 et E126 de désactivation du codage DTMF par le terminal T et le serveur SRV1, un canal de communication est établi entre eux sans codage DTMF, mais en se basant sur la solution alternative proposée par le serveur SRV1. Des dispositifs du réseau WAN en coupure de flux entre le terminal T et le serveur SRV1 auront connaissance par la lecture des messages de type SIP 200 OK (E118, E120) et / ou son acquittement (E124, E126), que ce canal n'utilise pas le codage DTMF et désactivent alors l'écoute sur ce canal de codes DTMF.

Au cours d'une étape E128, le serveur SRV1 envoie au terminal T un flux de données, pour lui proposer plusieurs options de navigation dans une hiérarchie de service, par exemple ce flux de données comporte un message vocal: "dites 1 ou commercial pour joindre un agent commercial, dites 2 ou technique pour joindre le service technique".

Conformément à l'état de la technique, ce flux de données est transféré du serveur SRV1 via le réseau WAN vers la pile SIP de l'équipement BX, puis de celui-ci, via la base B, vers le terminal T. Le terminal T reçoit ce flux de données au cours d'une étape E130.

Au cours d'une étape E132, le terminal T détecte un message vocal MVoc2 de l'utilisateur, par exemple "1" ou "commercial". Conformément au mode appliqué au cours de l'étape E122, le terminal T envoie ce message vocal MVoc2 au serveur SRV1 de manière standard dans le flux téléphonique.

Le serveur SRV1 reçoit le message vocal MVoc2 au cours d'une étape E134, l'interprète via sa solution de reconnaissance vocale et déduit qu'il s'agit d'une sélection de la première option.

Au cours d'une étape E136, le serveur SRV1 envoie un second flux de données au terminal T, en tenant compte de l'interprétation du message MVoc2. Ce second flux peut être un message vocal déroulant un menu de type "pour une nouvelle commande, dites 1 ou nouvelle; pour une commande en cours, dites 2 ou en cours, pour une réclamation, dites 3 ou réclamation...".

La **figure 4** est un organigramme représentant des étapes d'un procédé de traitement de messages vocaux par un terminal, conforme à l'invention, mis en œuvre par le système communiquant USR, conforme à l'invention, en référence aux étapes E100, E110, E112, E120, E120', E222, E234, E236 et E238 décrites ci-après. L'organigramme de la figure 4 représente également des étapes d'un procédé de traitement d'une demande de désactivation d'un codage DTMF, conforme à l'invention, mis en œuvre par le serveur SRV2, conforme à l'invention, en référence aux étapes E114, E216, E218 et E232 décrites ci-après.

Selon le mode décrit ici, les procédés de l'invention peuvent être mis en œuvre dans un réseau dont l'architecture est illustrée par la figure 1 ou par la figure 2.

Nous supposons ici que le terminal T est déjà appairé avec la base B.

Dans le mode décrit ici, les procédés comportent des étapes E100 à E114 mises en œuvre par le système communicant USR, le dispositif BCK et le serveur SRV2, similaires aux étapes E100 à E114 décrites en référence à la figure 3, mises en œuvre par le système USR, le dispositif BCK et le serveur SRV1.

Suite à la réception E114 de la demande DMD, le serveur SRV2 ne disposant pas de solution alternative au codage DTMF, maintient au cours d'une étape E216 le codage DTMF.

Au cours d'une étape E218, le serveur SRV2 envoie un message de signalisation de type « SIP 200 OK» tout en insérant une donnée de configuration i-Conf2 dans ce message. Ce message de signalisation permet d'informer le terminal T que le serveur SRV2 accepte de recevoir la communication émise par le terminal T, mais aussi de transmettre la donnée i-Conf2. Cette donnée i-Conf2 comporte un acquittement négatif de la demande DMD de désactivation du codage DTMF sur le canal connectant le serveur SRV2 au terminal T.

Au cours d'étapes E120 et E120', similaires aux étapes E120 et E120' décrites en référence à la figure 3, la couche protocolaire SIP de l'équipement BX reçoit ce message de signalisation et le terminal T reçoit la donnée de configuration i-Conf2.

Au cours d'une étape E222, le terminal T interprète la donnée de configuration i-Conf2, et applique un mode de configuration dans lequel il maintient le codage DTMF actif.

En parallèle, suite à la réception du message de type SIP 200 OK, l'équipement BX envoie au cours d'une étape E124 un acquittement au serveur SRV2. A la réception E226 de cet acquittement, un canal de communication est établi entre le terminal T et le serveur SRV2, ce canal utilise le codage DTMF.

Au cours d'une étape E128, similaire à l'étape E128 décrite en référence à la figure 3, le serveur SRV2 envoie au terminal T un flux de données, pour lui proposer plusieurs options de navigation dans une hiérarchie de son service, par exemple ce flux de données comporte un message vocal: "tapez 1 pour joindre un agent commercial, tapez 2 pour joindre le service technique".

Le terminal T reçoit ce flux de données au cours d'une étape E130.

Au cours d'une étape E232, le serveur SRV2 envoie au terminal T un message M comportant une donnée de configuration iConf3. Cette donnée iConf3 comporte une commande pour que le terminal T interprète pendant une durée déterminée des messages vocaux détectés par ce terminal T en tant que commandes vocales.

Le terminal T reçoit le message M et extrait la donnée de configuration iConf3 à partir de ce message au cours d'une étape E234.

Au cours d'une étape E236, le terminal T interprète la donnée iConf3 et applique un mode de configuration pour interpréter les prochains messages vocaux détectés, pendant la durée déterminée, en tant que commandes vocales. Le terminal T n'aura plus besoin de détecter le message de réveil MCmd pour passer à ce mode d'interprétation de commandes vocales.

Au cours d'une étape E238, le terminal T détecte un message vocal MVoc2 "1". Conformément au mode appliqué au cours de l'étape E236, le terminal T interprète le message vocal MVoc2 en tant que commande vocale et l'envoie au dispositif spécifique BCK dans un message de type HTTP Put. Dans un mode de réalisation particulier, le terminal T préfixe vocalement le message vocal MVoc2 transmis au dispositif BCK avec un message vocal « DTMF » de sorte que le dispositif BCK reçoive un message vocal « DTMF 1 » alors que l'utilisateur du terminal T n'a prononcé que « 1 ».

De façon similaire à l'étape E106, le dispositif BCK interprète au cours d'une étape E240 la commande vocale MVoc2 et envoie en retour au terminal T, dans un message de type HTTP 200 OK, une commande pour que le terminal T génère un code DTMF "1".

Le terminal T reçoit cette commande au cours d'une étape E242, et envoie au serveur SRV2 le code DTMF "1" au cours d'une étape E244.

Au cours d'une étape E246, la pile SIP de l'équipement BX insère ce code DTMF dans un message de type RTP RFC4733 avant de le transmettre au serveur SRV2.

Le serveur SRV2 reçoit ce message vocal et extrait le code DTMF au cours d'une étape E248, et déduit qu'il s'agit d'une sélection de la première option, le service commercial.

Nous supposons que la durée précisée par la donnée de configuration iConf3 expire au cours d'une étape E250. Au cours de cette étape E250, le terminal T applique son mode de configuration par défaut, pour n'interpréter des messages vocaux en tant que commandes que sur la détection du message de réveil MCmd.

La **figure 5** illustre un exemple de mise en œuvre de l'étape E100 de détermination par la base B que le terminal T ne dispose pas d'un clavier pour générer des codes DTMF, selon un mode de réalisation de l'invention.

Dans cet exemple, l'étape E100 est mise en œuvre au cours de l'appairage du terminal T sur la base B. Ce mode peut être mis en œuvre dans un réseau dont l'architecture correspond à celle illustrée par la figure 1 ou par la figure 2.

Au cours d'une étape E500, le terminal T demande à la base des droits d'accès, en lui envoyant un message de type ACCESS-RIGHTS-REQ, conforme à la norme DECT, sauf que conformément à la présente invention, ce message est modifié pour insérer une information « NoKeyboard » indiquant que le terminal T ne dispose pas de clavier.

La base B reçoit cette information au cours de l'étape E100. Cette étape E100, comprise dans la phase d'appairage, est suivie par des échanges de messages d'appairage conformes à la norme DECT.

La **figure 6** illustre un exemple de mise en œuvre de l'étape E100 de détermination par la base B que le terminal T ne dispose pas d'un clavier permettant de générer des codes DTMF, selon un autre mode de réalisation de l'invention.

Dans le mode décrit ici, le terminal T est déjà appairé sur la base B. Ce mode peut être mis en œuvre dans un réseau dont l'architecture correspond à celle illustrée par la figure 1 ou par la figure 2.

Le terminal T envoie au cours d'une étape E600 un message MSG de type CC-FACILITY, connu de la norme DECT, mais en le modifiant par une insertion, dans un champ « Escape to Proprietary » de ce message, d'une information « NoKeyboard » indiquant que le terminal T ne dispose pas de clavier.

La base B reçoit ce message MSG au cours de l'étape E100.

Alternativement, au cours de l'étape E600, le terminal T envoie à la base B un message MSG de type MM-IWU, en insérant l'information « NoKeyboard» dans un champ « Escape to Proprietary » ou dans un champ « IWU-IWU » de ce message MSG.

Alternativement, au cours d'une signalisation d'une communication entrante, et au cours de l'étape E600, le terminal T envoie à la base B un message MSG de type CC-Info, en insérant l'information « NoKeyboard» dans un champ « Escape to Proprietary » de ce message. Ce message MSG de type CC-Info peut être envoyé par le terminal T après une réception d'un message CC-Setup et avant ou après l'envoi d'un message CC-Alerting, par exemple.

Alternativement, au cours d'une signalisation d'une communication sortante, et au cours de l'étape E600, le terminal T envoie à la base B un message MSG de type CC-Info, en insérant l'information « NoKeyboard» dans un champ « Escape to Proprietary » de ce message. Ce message MSG de type CC-Info peut être envoyé par le terminal T après une réception d'un message CC-Call Proceeding, par exemple.

La **figure 7** illustre un exemple de mise en œuvre de l'étape E100 de détermination par la base B que le terminal T ne dispose pas d'un clavier permettant de générer des codes DTMF, selon un autre mode de réalisation de l'invention.

Dans le mode décrit ici, le terminal T est déjà appairé sur la base B. Ce mode peut être mis en œuvre dans un réseau dont l'architecture correspond à celle illustrée par la figure 1 où la base B est comprise dans un équipement BX de terminaison de réseau.

L'équipement BX reçoit au cours d'une étape E700 des données de configuration CFG d'un dispositif D de configuration.

Etant donné que la base B fait partie de l'équipement BX, les données CFG comportent en outre des données de configuration CFG' qui concernent la base B.

A tire d'exemple, un utilisateur du terminal T peut sélectionner via le dispositif D, un paramètre de configuration indiquant que son terminal T ne dispose pas de clavier. Le dispositif D peut également être un serveur réseau de configuration de l'équipement BX.

En particulier, même si le terminal T dispose d'un clavier, un utilisateur qui souhaite désactiver le codage DTMF pour améliorer son expérience et éviter l'annonce du message de réveil MCmd, peut insérer une fausse information indiquant que son terminal T ne dispose pas de clavier.

L'équipement BX extrait de ses propres données de configuration CFG, les données CFG' concernant la base et les envoie à la base B. Au cours d'une étape E100, la base B reçoit ses données de configuration CFG'.

Par lecture des données CFG', la base B détermine que le terminal T ne dispose pas de clavier.

Autres modes de réalisation:
Dans un autre mode de réalisation, le terminal T dispose de sa propre pile protocolaire SIP, le système communiquant USR conforme à l'invention ne comporte que ce terminal T et les étapes décrites précédemment mises en œuvre par la base B ou par la pile SIP de l'équipement BX sont mises en œuvre par le terminal T.

Dans un mode de réalisation, la requête DMD est comprise dans un message de signalisation de type SIP INVITE, SIP REINVITE, SIP UPDATE, SIP 200 OK, ou SIP 1XX, ou dans une offre ou une demande conforme au protocole SDP, ou dans un entête SIP Supported ou SIP Required ou dans un nouveau entête SIP dédié pour transmettre ladite requête DMD.

Dans un mode de réalisation, la requête DMD est comprise dans un message conforme au protocole ISUP/BICC de type IAM, ACM, ANM, PRG, ou CON.

Dans un mode de réalisation, la requête DMD est comprise dans une requête HTTP de demande d'établissement d'une session WebRTC.

Dans un mode de réalisation, le terminal T envoie au serveur SRV1 ou au serveur SRV2 une séquence en DTMF comportant la requête DMD.

Dans un mode de réalisation, le terminal T envoie au serveur SRV1 un message vocal comportant la requête DMD, ce serveur SRV1 disposant de moyens de reconnaissance vocale pour interpréter le message vocal.

Dans un mode de réalisation, lorsque le terminal T reçoit (E120') du serveur SRV2 la donnée de configuration iConf2 comportant l'acquittement négatif de la requête DMD, ce terminal T interprète les messages vocaux qu'il détecte pendant une durée déterminée en tant que commandes vocales. Dans ce mode, l'envoi (E232) par le serveur SRV2 de la donnée de configuration iConf3 est optionnel.

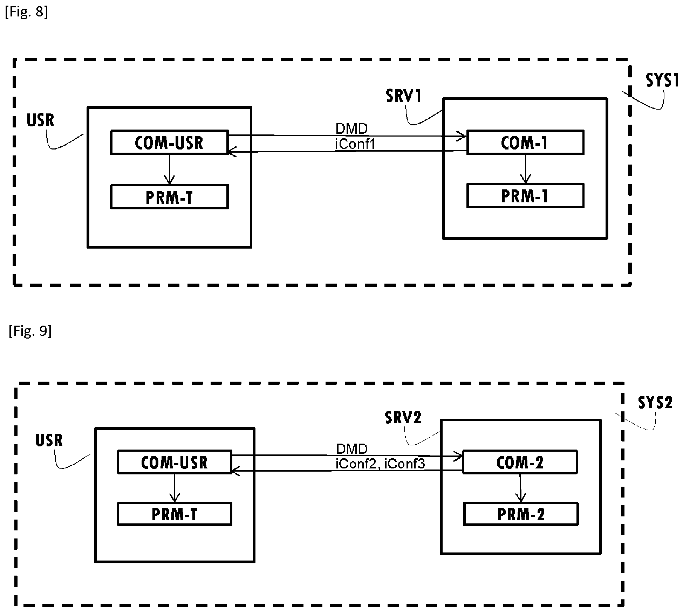

La **figure 8** représente des architectures fonctionnelles, selon un mode de réalisation de l'invention, d'un système SYS1 de communication, du système communiquant USR comportant le terminal T et du serveur vocal SRV1, tous conformes à l'invention.

La **figure 9** représente des architectures fonctionnelles, selon un mode de réalisation de l'invention, d'un système SYS2 de communication, du système communiquant USR comportant le terminal T et du serveur vocal SRV2, tous conformes à l'invention.

Le système SYS1 comporte le système communiquant USR et le serveur SRV1.

Le système SYS2 comporte le système communiquant USR et le serveur SRV2.

Le système communiquant USR conforme à l'invention comporte au moins le terminal T. Dans les modes décrits en référence aux figures 3 et 4, le système communiquant USR comporte en outre la base B et l'équipement BX.

Le système communiquant USR comporte :
- un module de communication COM-USR configuré pour envoyer au serveur vocal SRV1 (ou SRV2) la requête DMD devant être interprétée par ce serveur pour désactiver le codage DTMF sur un canal de communication entre ce serveur SRV1 (ou SRV2) et le terminal T, et pour recevoir de ce serveur SRV1 (ou SRV2) la donnée de configuration, iConf1, (ou iConf2 et / ou iConf3) du terminal T; et
- un module de paramétrage PRM-T configuré pour interpréter la donnée de configuration iConf1, (ou iConf2 et / ou iConf3) et pour appliquer au terminal T un mode de configuration obtenu à partir de l'interprétation, le terminal T devant traiter des messages vocaux selon ce mode de configuration.

Le serveur vocal SRV1 comporte :
-- un module de communication COM-1 configuré pour recevoir la requête DMD devant être interprétée par le serveur pour désactiver le codage DTMF sur le canal qui connecte ce serveur SRV1 au terminal T; et
-- un module de paramétrage PRM-1 configuré pour activer pour ledit canal une solution alternative pour communiquer avec le terminal T, à la place dudit codage DTMF, le module de communication COM-1 étant configuré pour envoyer au terminal T la donnée de configuration iConf1 comportant un acquittement positif de la requête DMD.

Le serveur vocal SRV2 est connecté au terminal T via un canal de communication et pouvant communiquer avec le terminal T par un codage DTMF, le serveur SRV2 comprend:
-- un module de communication COM-2 configuré pour recevoir la requête DMD devant être interprétée par le serveur SRV2 pour désactiver le codage DTMF sur ledit canal ; et
-- un module de paramétrage PRM-2 configuré pour maintenir le codage DTMF, le module de communication COM-2 étant configuré pour envoyer au terminal T la donnée de configuration iConf2 comportant un acquittement négatif de la requête DMD et la donnée de configuration iConf3 comportant une commande pour que le terminal T interprète pendant une durée déterminée des messages vocaux détectés par ce terminal en tant que commandes vocales.

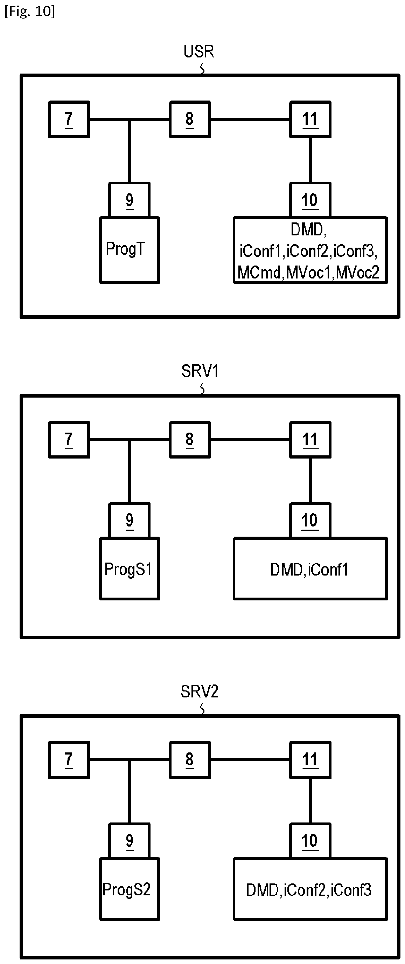

Dans le mode de réalisation décrit ici, le système communiquant USR, le serveur SRV1 et le serveur SRV2 ont chacun l'architecture matérielle d'un ordinateur, telle qu'illustrée à la **figure 10****.**

Chacune des architectures du système communiquant USR et des serveurs SRV1 et SRV2 comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du système USR selon l'invention constitue un support d'enregistrement conforme à l'invention, lisible par le processeur 7 et sur lequel est enregistré ici un programme d'ordinateur ProgT conforme à l'invention.

La mémoire morte 9 du serveur SRV1 selon l'invention constitue un support d'enregistrement conforme à l'invention, lisible par le processeur 7 et sur lequel est enregistré ici un programme d'ordinateur ProgS1 conforme à l'invention.

La mémoire morte 9 du serveur SRV2 selon l'invention constitue un support d'enregistrement conforme à l'invention, lisible par le processeur 7 et sur lequel est enregistré ici un programme d'ordinateur ProgS2 conforme à l'invention.

La mémoire 10 du système communiquant USR permet d'enregistrer des variables utilisées pour l'exécution des étapes du procédé de traitement de messages vocaux selon l'invention, telles que la requête DMD, les données de configuration iConf1, iConf2 et iConf3, le message de réveil MCmd et les messages vocaux détectés MVoc1 et MVoc2.

La mémoire 10 du serveur SRV1 permet d'enregistrer des variables utilisées pour l'exécution des étapes du procédé de désactivation d'un codage DTMF sur un canal selon l'invention, telles que la requête DMD et la donnée de configuration iConf1.

La mémoire 10 du serveur SRV2 permet d'enregistrer des variables utilisées pour l'exécution des étapes du procédé de traitement d'une demande de désactivation d'un codage DTMF sur un canal selon l'invention, telles que la requête DMD et les données de configuration iConf2 et iConf3.

Le programme d'ordinateur ProgT définit des modules fonctionnels et logiciels ici, configurés pour traiter des messages vocaux par le terminal T. Ces modules fonctionnels s'appuient sur et/ou commandent les éléments matériels 7-11 du système USR cités précédemment.

Le programme d'ordinateur ProgS1 définit des modules fonctionnels et logiciels ici, configurés pour désactiver un codage DTMF par le serveur SRV1. Ces modules fonctionnels s'appuient sur et/ou commandent les éléments matériels 7-11 du serveur SRV1 cités précédemment.

Le programme d'ordinateur ProgS2 définit des modules fonctionnels et logiciels ici, configurés pour traiter par le serveur SRV2 une demande de désactivation d'un codage DTMF. Ces modules fonctionnels s'appuient sur et/ou commandent les éléments matériels 7-11 du serveur SRV2 cités précédemment.

## Revendications

1. Procédé de traitement de messages vocaux par un terminal, **caractérisé en ce que** ledit procédé comprend des étapes de:
-- envoi (E110, E112) à un serveur vocal (SRV1, SRV2) d'une requête (DMD) devant être interprétée par ledit serveur pour désactiver un codage DTMF sur un canal de communication entre ledit serveur et ledit terminal (T);
-- réception (E120, E120', E234) dudit serveur d'une donnée de configuration (iConf1, iConf2, iConf3) dudit terminal;
-- interprétation (E122, E236) de ladite donnée de configuration et application audit terminal d'un mode de configuration obtenu à partir de ladite interprétation ; et
-- traitement (E132, E238) desdits messages vocaux (MVoc2) par ledit terminal selon ledit mode de configuration.

2. Procédé selon la revendication 1 dans lequel ladite requête (DMD) est comprise dans un champ d'un message de signalisation.

3. Procédé selon la revendication 2 dans lequel ledit message de signalisation est :
-- un message de type SIP INVITE, SIP REINVITE, SIP UPDATE, SIP 200 OK, SIP 1XX;
-- une offre ou une réponse SDP ;
-- un entête SIP Supported ou SIP Required ;
-- un nouveau entête SIP dédié pour transmettre ladite requête;
-- un message conforme au protocole ISUP/BICC de type IAM, ACM, ANM, PRG, ou CON; ou
-- une requête HTTP de demande d'établissement d'une session WebRTC.

4. Procédé selon la revendication 1 dans lequel ladite requête est comprise dans une séquence en DTMF ou dans un message vocal pouvant être interprété par ledit serveur.

5. Procédé selon l'une des revendications 1 à 4 **caractérisé en ce que** ledit envoi de ladite requête n'est effectué que si on détermine (E100) que ledit terminal ne dispose pas d'un clavier permettant de générer des codes en DTMF.

6. Procédé selon la revendication 5 dans lequel on détermine (E100) que ledit terminal ne dispose pas d'un clavier :
-- à partir d'un message reçu dudit terminal, ledit message pouvant être un message d'appairage dudit terminal avec un autre dispositif, ou un message de type CC-FACILTY, MM-IWU ou CC-INFO; ou
-- par lecture d'une donnée de configuration d'un dispositif (B) auquel ledit terminal est appairé.

7. Procédé selon l'une des revendications 1 à 6 dans lequel ladite donnée de configuration comporte :
-- un acquittement positif de ladite requête pour la désactivation du codage DTMF; ou
-- une commande pour que ledit terminal interprète pendant une durée déterminée lesdits messages vocaux en tant que commandes vocales.

8. Procédé de désactivation d'un codage DTMF sur un canal de communication entre un serveur vocal (SRV1) et un terminal (T), **caractérisé en ce que** ledit procédé est mis en œuvre par ledit serveur et comprend des étapes de:
-- réception (E114) d'une requête (DMD) devant être interprétée par ledit serveur pour désactiver le codage DTMF sur ledit canal ;
-- activation (E116) pour ledit canal d'une solution alternative pour communiquer avec ledit terminal, à la place dudit codage DTMF ; et
-- envoi (E118) audit terminal d'une donnée de configuration (iConf1) comportant un acquittement positif de ladite requête.

9. Procédé de désactivation selon la revendication 8 dans lequel ladite solution alternative comporte une technique de reconnaissance vocale en réception et une technique de synthèse vocale en émission.

10. Procédé de traitement d'une demande de désactivation d'un codage DTMF sur un canal de communication entre un serveur vocal (SRV2) et un terminal (T), **caractérisé en ce que** ledit procédé est mis en œuvre par ledit serveur et comprend des étapes de:
-- réception (E114) d'une requête (DMD) devant être interprétée par ledit serveur pour désactiver le codage DTMF sur ledit canal;
-- maintien (E216) dudit codage DTMF;
-- envoi (E232) audit terminal d'un acquittement négatif (iConf2) de ladite requête et / ou d'une donnée de configuration (iConf3) comportant une commande pour que ledit terminal interprète pendant une durée déterminée des messages vocaux détectés par ledit terminal en tant que commandes vocales.

11. Programme d'ordinateur (ProgT, ProgS1, ProgS2) comportant des instructions pour l'exécution :
- des étapes du procédé de traitement de messages vocaux selon l'une quelconque des revendications 1 à 7, ou
- des étapes du procédé de désactivation d'un codage DTMF selon l'une quelconque des revendications 8 ou 9, ou
- des étapes du procédé de traitement d'une demande de désactivation d'un codage DTMF selon la revendication 10,
lorsque ledit programme est exécuté par un ordinateur.

12. Support d'enregistrement (7) lisible par un ordinateur sur lequel est enregistré un programme d'ordinateur selon la revendication 11.

13. Système communiquant (USR) comportant un terminal, **caractérisé en ce que** ledit système communiquant comprend :
-- un module de communication (COM-USR) configuré pour envoyer à un serveur vocal une requête devant être interprétée par ledit serveur pour désactiver un codage DTMF sur un canal de communication entre ledit serveur et ledit terminal, et pour recevoir dudit serveur une donnée de configuration dudit terminal ; et
-- un module de paramétrage (PRM-T) configuré pour interpréter ladite donnée de configuration et pour appliquer audit terminal un mode de configuration obtenu à partir de ladite interprétation, ledit terminal devant traiter des messages vocaux selon ledit mode de configuration.

14. Système communiquant (USR) selon la revendication 13 comportant en outre un équipement de terminaison de réseau sur lequel ledit terminal est appairé.

15. Serveur vocal (SRV1) connecté à un terminal via un canal de communication et pouvant communiquer avec ledit terminal par un codage DTMF, **caractérisé en ce que** ledit serveur comprend :
-- un module de communication (COM-1) configuré pour recevoir une requête (DMD) devant être interprétée par ledit serveur pour désactiver le codage DTMF sur ledit canal ; et
-- un module de paramétrage (PRM-1) configuré pour activer pour ledit canal une solution alternative pour communiquer avec ledit terminal, à la place dudit codage DTMF,
ledit module de communication étant configuré pour envoyer audit terminal une donnée de configuration (iConf1) comportant un acquittement positif de ladite requête.

16. Serveur vocal (SRV2) connecté à un terminal (T) via un canal de communication et pouvant communiquer avec ledit terminal par un codage DTMF, **caractérisé en ce que** ledit serveur comprend :
-- un module de communication (COM-2) configuré pour recevoir une requête (DMD) devant être interprétée par ledit serveur pour désactiver le codage DTMF sur ledit canal ; et
-- un module de paramétrage (PRM-2) configuré pour maintenir ledit codage DTMF,
ledit module de communication étant configuré pour envoyer audit terminal un acquittement négatif (iConf2) de ladite requête (DMD) et / ou une donnée de configuration (iConf3) comportant une commande pour que ledit terminal interprète pendant une durée déterminée des messages vocaux détectés par ledit terminal en tant que commandes vocales.

17. Système de communication (SYS1, SYS2) comportant un système communiquant (USR) selon l'une des revendications 13 ou 14 et un serveur vocal (SRV1, SRV2) selon l'une des revendications 15 ou 16.

## Patentansprüche

1. Verfahren zur Verarbeitung von Sprachnachrichten durch ein Endgerät, **dadurch gekennzeichnet, dass** das Verfahren die folgenden Schritte enthält:
-- Senden (E110, E112) einer Anforderung (DMD) an einen Sprachserver (SRV1, SRV2), die vom Server interpretiert werden soll, um eine DTMF-Codierung auf einem Kommunikationskanal zwischen dem Server und dem Endgerät (T) zu deaktivieren;
-- Empfang (E120, E120', E234) eines Konfigurationsdatenwerts (iConf1, iConf2, iConf3) des Endgeräts vom Server;
-- Interpretation (E122, E236) des Konfigurationsdatenwerts und Anwendung eines ausgehend von der Interpretation erhaltenen Konfigurationsmodus an das Endgerät; und
-- Verarbeitung (E132, E238) der Sprachnachrichten (MVoc2) durch das Endgerät gemäß dem Konfigurationsmodus.

2. Verfahren nach Anspruch 1, wobei die Anforderung (DMD) in einem Feld einer Signalisierungsnachricht enthalten ist.

3. Verfahren nach Anspruch 2, wobei die Signalisierungsnachricht ist:
-- eine Nachricht des Typs SIP INVITE, SIP REINVITE, SIP UPDATE, SIP 200 OK, SIP 1XX;
-- ein Angebot oder eine Antwort SDP;
-- eine Kopfzeile SIP Supported oder SIP Required;
-- eine neue Kopfzeile SIP, die dediziert ist, die Anforderung zu übertragen;
-- eine Nachricht gemäß dem Protokoll ISUP/BICC des Typs IAM, ACM, ANM, PRG oder CON; oder
-- eine Anforderung HTTP eines Antrags zum Aufbau einer Sitzung WebRTC.

4. Verfahren nach Anspruch 1, wobei die Anforderung in einer DTMF-Sequenz oder in einer Sprachnachricht enthalten ist, die vom Server interpretiert werden kann.

5. Verfahren nach einem der Ansprüche 1 bis 4, **dadurch gekennzeichnet, dass** das Senden der Anforderung nur ausgeführt wird, wenn festgestellt wird (E100), dass das Endgerät über keine Tastatur verfügt, die es ermöglicht, Codes in DTMF zu generieren.

6. Verfahren nach Anspruch 5, wobei festgestellt wird (E100), dass das Endgerät nicht über eine Tastatur verfügt:
-- ausgehend von einer vom Endgerät empfangenen Nachricht, wobei die Nachricht eine Nachricht der paarweisen Zuordnung des Endgeräts mit einer anderen Vorrichtung oder eine Nachricht des Typs CC-FACILTY, MM-IWU oder CC-INFO sein kann; oder
-- durch Lesen eines Konfigurationsdatenwerts einer Vorrichtung (B), der das Endgerät paarweise zugeordnet ist.

7. Verfahren nach einem der Ansprüche 1 bis 6, wobei der Konfigurationsdatenwert aufweist:
-- eine positive Bestätigung der Anforderung für die Deaktivierung der DTMF-Codierung; oder
-- eine Steuerung, damit das Endgerät während einer bestimmten Dauer die Sprachnachrichten als Sprachsteuerungen interpretiert.

8. Verfahren zur Deaktivierung einer DTMF-Codierung auf einem Kommunikationskanal zwischen einem Sprachserver (SRV1) und einem Endgerät (T), **dadurch gekennzeichnet, dass** das Verfahren vom Server durchgeführt wird und folgende Schritte enthält:
-- Empfang (E114) einer Anforderung (DMD), die vom Server interpretiert werden soll, um die DTMF-Codierung auf dem Kanal zu deaktivieren;
-- Aktivierung (E116) einer alternativen Lösung für den Kanal anstelle der DTMF-Codierung, um mit dem Endgerät zu kommunizieren; und
-- Senden (E118) eines Konfigurationsdatenwerts (iConf1) an das Endgerät, der eine positive Bestätigung der Anforderung aufweist.

9. Deaktivierungsverfahren nach Anspruch 8, wobei die alternative Lösung eine Technik der Spracherkennung beim Empfang und eine Technik der Sprachsynthese beim Senden aufweist.

10. Verfahren zur Verarbeitung eines Antrags zur Deaktivierung einer DTMF-Codierung auf einem Kommunikationskanal zwischen einem Sprachserver (SRV2) und einem Endgerät (T), **dadurch gekennzeichnet, dass** das Verfahren vom Server durchgeführt wird und folgende Schritte enthält:
-- Empfang (E114) einer Anforderung (DMD), die vom Server interpretiert werden soll, um die DTMF-Codierung auf dem Kanal zu deaktivieren;
-- Beibehaltung (E216) der DTMF-Codierung;
-- Senden (E232) einer negativen Bestätigung (iConf2) der Anforderung und/oder eines Konfigurationsdatenwerts (iConf3) an das Endgerät, der eine Steuerung aufweist, damit das Endgerät während einer bestimmten Dauer vom Endgerät erfasste Sprachnachrichten als Sprachsteuerungen interpretiert.

11. Computerprogramm (ProgT, ProgS1, ProgS2), das Anweisungen enthält für die Ausführung von:
- Schritten des Verfahrens zur Verarbeitung von Sprachnachrichten nach einem der Ansprüche 1 bis 7, oder
- Schritten des Verfahrens zur Deaktivierung einer DTMF-Codierung nach einem der Ansprüche 8 oder 9, oder
- Schritten des Verfahrens zur Verarbeitung einer Deaktivierungsanfrage einer DTMF-Codierung nach Anspruch 10,
wenn das Programm von einem Computer ausgeführt wird.

12. Computerlesbarer Speicherträger (7), auf dem ein Computerprogramm nach Anspruch 11 gespeichert ist.

13. Kommunizierendes System (USR), das ein Endgerät aufweist, **dadurch gekennzeichnet, dass** das kommunizierende System enthält:
-- ein Kommunikationsmodul (COM-USR), das konfiguriert ist, um eine Anforderung an einen Sprachserver zu senden, die vom Server interpretiert werden soll, um eine DTMF-Codierung auf einem Kommunikationskanal zwischen dem Server und dem Endgerät zu deaktivieren, und um vom Server einen Konfigurationsdatenwert des Endgeräts zu empfangen; und
-- ein Parametrierungsmodul (PRM-T), das konfiguriert ist, um den Konfigurationsdatenwert zu interpretieren und um an das Endgerät einen Konfigurationsmodus anzuwenden, der ausgehend von der Interpretation erhalten wird, wobei das Endgerät Sprachnachrichten gemäß dem Konfigurationsmodus verarbeiten soll.

14. Kommunizierendes System (USR) nach Anspruch 13, das außerdem eine Netzabschlussausrüstung aufweist, mit der das Endgerät paarweise verbunden ist.

15. Sprachserver (SRV1), der über einen Kommunikationskanal mit einem Endgerät verbunden ist und mit dem Endgerät durch eine DTMF-Codierung kommunizieren kann, **dadurch gekennzeichnet, dass** der Server enthält:
-- ein Kommunikationsmodul (COM-1), das konfiguriert ist, eine Anforderung (DMD) zu empfangen, die vom Server interpretiert werden soll, um die DTMF-Codierung auf dem Kanal zu deaktivieren; und
-- ein Parametrierungsmodul (PRM-1), das konfiguriert ist, eine alternative Lösung anstelle der DTMF-Codierung für die Kommunikation mit dem Endgerät für den Kanal zu aktivieren,
wobei das Kommunikationsmodul konfiguriert ist, einen Konfigurationsdatenwert (iConf1) an das Endgerät zu senden, der eine positive Bestätigung der Anforderung aufweist.

16. Sprachserver (SRV2), der über einen Kommunikationskanal mit einem Endgerät (T) verbunden ist und durch eine DTMF-Codierung mit dem Endgerät kommunizieren kann, **dadurch gekennzeichnet, dass** der Server enthält:
-- ein Kommunikationsmodul (COM-2), das konfiguriert ist, eine Anforderung (DMD) zu empfangen, die vom Server interpretiert werden soll, um die DTMF-Codierung auf dem Kanal zu deaktivieren; und
-- ein Parametrierungsmodul (PRM-2), das konfiguriert ist, die DTMF-Codierung beizubehalten,
wobei das Kommunikationsmodul konfiguriert ist, eine negative Bestätigung (iConf2) der Anforderung (DMD) und/oder einen Konfigurationsdatenwert (iConf3) an das Endgerät zu senden, der eine Steuerung enthält, damit das Endgerät während einer bestimmten Dauer vom Endgerät erfasste Sprachnachrichten als Sprachsteuerungen interpretiert.

17. Kommunikationssystem (SYS1, SYS2), das ein kommunizierendes System (USR) nach einem der Ansprüche 13 oder 14 und einen Sprachserver (SRV1, SRV2) nach einem der Ansprüche 15 oder 16 aufweist.

## Claims

1. Method for processing voice messages by means of a terminal, **characterized in that** said method comprises steps of:
-- sending (E110, E112) a voice server (SRV1, SRV2) a request (DMD) which has to be interpreted by said server in order to deactivate DTMF coding on a communication channel between said server and said terminal (T);
-- receiving (E120, E120', E234) a configuration datum (iConf1, iConf2, iConf3) for said terminal from said server;
-- interpreting (E122, E236) said configuration datum and applying a configuration mode obtained on the basis of said interpretation to said terminal; and
-- processing (E132, E238) said voice messages (MVoc2) by means of said terminal according to said configuration mode.

2. Method according to Claim 1, in which said request (DMD) is comprised in a field of a signalling message.

3. Method according to Claim 2, in which said signalling message is:
-- a message of SIP INVITE, SIP REINVITE, SIP UPDATE, SIP 200 OK, or SIP 1XX type;
-- an SDP offer or response;
-- an SIP Supported or SIP Required header;
-- a dedicated new SIP header for transmitting said request;
-- a message which is in accordance with the ISUP/BICC protocol of IAM, ACM, ANM, PRG or CON type; or
-- an HTTP request for requesting a WebRTC session to be established.

4. Method according to Claim 1, in which said request is comprised in a DTMF sequence or in a voice message which may be interpreted by said server.

5. Method according to one of Claims 1 to 4, **characterized in that** said request is sent only if it is determined (E100) that said terminal does not have a keyboard which allows the DTMF codes to be generated.

6. Method according to Claim 5, in which it is determined (E100) that said terminal does not have a keyboard:
-- on the basis of a message received from said terminal, said message being able to be a message for pairing said terminal with another device, or a message of CC-FACILTY, MM-IWU or CC-INFO type; or
-- by reading a configuration datum for a device (B) to which said terminal is paired.

7. Method according to one of Claims 1 to 6, in which said configuration datum comprises:
-- a positive acknowledgement of said request to deactivate the DTMF coding; or
-- a command for said terminal to interpret, for a given period, said voice messages as voice commands.

8. Method for deactivating DTMF coding on a communication channel between a voice server (SRV1) and a terminal (T), **characterized in that** said method is implemented by said server and comprises steps of:
-- receiving (E114) a request (DMD), which has to be interpreted by said server, to deactivate the DTMF coding on said channel;
-- activating (E116), for said channel, an alternative solution for communicating with said terminal, instead of said DTMF coding; and
-- sending (E118) said terminal a configuration datum (iConf1) comprising a positive acknowledgement of said request.

9. Deactivation method according to Claim 8, in which said alternative solution comprises a voice recognition technique for receiving purposes and a voice synthesis technique for transmitting purposes.

10. Method for processing a request to deactivate DTMF coding on a communication channel between a voice server (SRV2) and a terminal (T), **characterized in that** said method is implemented by said server and comprises steps of:
-- receiving (E114) a request (DMD), which has to be interpreted by said server, to deactivate the DTMF coding on said channel;
-- maintaining (E216) said DTMF coding;
-- sending (E232) said terminal a negative acknowledgement (iConf2) of said request and/or a configuration datum (iConf3) comprising a command for said terminal to interpret, for a given period, voice messages detected by said terminal as voice commands.

11. Computer program (ProgT, ProgS1, ProgS2) comprising instructions for executing:
- the steps of the method for processing voice messages according to any one of Claims 1 to 7, or
- the steps of the method for deactivating DTMF coding according to either one of Claims 8 and 9, or
- the steps of the method for processing a request to deactivate DTMF coding according to Claim 10,
when said program is executed by a computer.

12. Storage medium (7) which may be read by a computer on which a computer program according to Claim 11 is stored.

13. Communicating system (USR) comprising a terminal, **characterized in that** said communicating system comprises:
-- a communication module (COM-USR) configured to send a voice server a request, which has to be interpreted by said server, to deactivate DTMF coding on a communication channel between said server and said terminal, and to receive a configuration datum for said terminal from said server; and
-- a parametrization module (PRM-T) configured to interpret said configuration datum and to apply a configuration mode obtained on the basis of said interpretation to said terminal, said terminal having to process voice messages according to said configuration mode.

14. Communicating system (USR) according to Claim 13, further comprising a network termination equipment to which said terminal is paired.

15. Voice server (SRV1) connected to a terminal via a communication channel and which may communicate with said terminal by means of DTMF coding, **characterized in that** said server comprises:
-- a communication module (COM-1) configured to receive a request (DMD), which has to be interpreted by said server, to deactivate the DTMF coding on said channel; and
-- a parametrization module (PRM-1) configured to activate, for said channel, an alternative solution for communicating with said terminal, instead of said DTMF coding,
said communication module being configured to send said terminal a configuration datum (iConf1) comprising a positive acknowledgement of said request.

16. Voice server (SRV2) connected to a terminal (T) via a communication channel and which may communicate with said terminal by means of DTMF coding, **characterized in that** said server comprises:
-- a communication module (COM-2) configured to receive a request (DMD), which has to be interpreted by said server, to deactivate the DTMF coding on said channel; and
-- a parametrization module (PRM-2) configured to maintain said DTMF coding,
said communication module being configured to send said terminal a negative acknowledgement (iConf2) of said request (DMD) and/or a configuration datum (iConf3) comprising a command for said terminal to interpret, for a given period, voice messages detected by said terminal as voice commands.

17. Communication system (SYS1, SYS2) comprising a communicating system (USR) according to one of Claims 13 and 14 and a voice server (SRV1, SRV2) according to one of Claims 15 and 16.
